# EUROPÄISCHE PATENTSCHRIFT

(11) **EP 1 767 982 B1**
(45) Veröffentlichungstag und Bekanntmachung des Hinweises auf die Patenterteilung: **11.11.2009**
(21) Anmeldenummer: 05020852.9
(22) Anmeldetag: 24.09.2005
(51) Int. Cl.: G02B 26/10, G02B 7/182

(54) **Ein-Spiegel-Scannervorrichtung für Hochleistungslaseranwendungen**
Single mirror scanning device for high-performance laser applications
Dispositif de balayage à mirroir unique pour des applications de laser à haute performance

(43) Veröffentlichungstag der Anmeldung: 28.03.2007
(73) Patentinhaber: TRUMPF Laser GmbH + Co. KG, 78713 Schramberg (DE)
(72) Erfinder: Huonker, Martin, 78658 Zimmern (DE)
(74) Vertreter: Kohler Schmid Möbus

(56) Entgegenhaltungen:
- EP-A- 0 692 729
- US-A1- 2001 048 784
- US-A1- 2003 197 910
- US-A1- 2004 004 775

## Beschreibung

Die vorliegende Erfindung betrifft eine Ein-Spiegel-Scannervorrichtung gemäß dem Oberbegriff von Anspruch 1.

Eine derartige Einspiegelscannervorrichtung ist beispielsweise durch die US-A-2003/0197910 bekannt geworden.

Die meisten Scannersysteme für die Strahlführung von Hochleistungslaserstrahlung basieren auf zwei unabhängig voneinander betriebenen Spiegeln, die den Strahl in jeweils einer Achse auslenken. Dies bedingt den Nachteil, dass beide Achsen eine unterschiedliche Dynamik aufweisen, da der zweite Spiegel größer sein muss als der erste. Ferner ergeben sich zwei unterschiedliche Drehachsen im Raum, was die Auslegung einer nachgeschalteten Fokussieroptik (F-theta-Objektiv) schwierig macht. Ein weiterer Nachteil besteht darin, dass die Abstände der beiden Drehachsen vom Objektiv unterschiedlich sein müssen und aus diesem Grund das Scanfeld elliptisch wird. Diese Nachteile werden durch Einspiegelscannersysteme behoben, bei denen ein einziger bewegter Spiegel die Strahlablenkung in zwei zueinander rechtwinkligen Achsen erlaubt. Solche Einspiegelscannersysteme sind in der Regel so realisiert, dass ein kardanisch auf Wälzlagern oder Gleitlagern aufgehängter Spiegel mit zwei unabhängigen Antrieben bewegt wird, wobei die eine Antriebseinheit von der zweiten, vorgelagerten Antriebseinheit mitbewegt wird. Dies bedingt wiederum, dass sich die Dynamik der beiden Achsen sehr stark voneinander unterscheidet. Die Lagerkonzepte haben den Nachteil, dass Gleit- oder Wälzlager verwendet werden, die jeweils nur auf einem Punkt und nicht umlaufend bewegt werden, mithin also einem mehr oder weniger starken Verschleiß unterliegen. Ferner besteht die Notwendigkeit, diese Lager zu schmieren, was aufgrund des Ausgasens von Schmierstoffen problematisch sein kann.

Die eingangs genannte US-A-2003/0197910 offenbart in Fign. 2 und 3 eine Ein-Spiegel-Scannervorrichtung mit einem Scannerspiegel, der um eine erste Achse an einem Rahmen drehbar gelagert ist, welcher um eine zur ersten Drehachse rechtwinklige zweite Achse drehbar gelagert ist, und mit zwei voneinander unabhängigen, nebeneinander angeordneten Linearantrieben zum jeweiligen Verschwenken des Scannerspiegels um die erste und zweite Drehachse, wobei der eine Linearantrieb exzentrisch zur ersten Drehachse an einem den Scannerspiegel tragenden Spiegelhalter angreift und der andere Linearantrieb exzentrisch zur zweiten Drehachse am Rahmen angreift.

Aus US-A-2004/0004775 und DE-A-199 63 382 sind ebenfalls Ein-Spiegel-Scannersysteme mit Scannerspiegeln bekannt, welche in Torsions-Festkörperlagem gelagert sind. Bei diesen bekannten Systemen handelt es sich jedoch um Mikrospiegel vor allem für die Anwendung in Laserdruckern, die durch elektrostatische oder magnetische Wechselwirkung um kleine Winkel aus ihrer Ruhelage ausgelenkt werden. Um so gelagerte Scannerspiegel für die Lasermaterialbearbeitung mit Laserstrahlung hoher Leistung, z.B. für Anwendungen in der Laserbeschriftung, Mikro-Materialbearbeitung oder beim Laserschweißen, einzusetzen, muss der Scannerspiegel jedoch um größere Winkel ausgelenkt werden können.

Es ist somit die Aufgabe der vorliegenden Erfindung, bei einer Ein-Spiegel-Scannervorrichtung der eingangs genannten Art größere Auslenkwinkel des Scannerspiegels, wie sie z.B. bei der Lasermaterialbearbeitung gefordert werden, zu ermöglichen.

Diese Aufgabe wird erfindungsgemäß durch eine Ein-Spiegel-Scannervorrichtung mit den Merkmalen von Anspruch 1 gelöst.

Die erfindungsgemäße Ein-Spiegel-Scannervorrichtung mit zwei Kurzhub-Lineareinheiten für die Bewegung des Scannerspiegels hat den wesentlichen Vorteil, dass die Antriebskraft eine relativ große Verdrehung des Scannerspiegels bei minimaler Bewegung der Linearantriebe bewirkt.

Bei bevorzugten Ausführungsformen der Erfindung ist vorgesehen, dass der Scannerspiegel bzw. ein diesen tragender Spiegelhalter am Rahmen über Torsionsdrehlager um die erste Drehachse und der Rahmen an einem äußeren Rahmen über Torsionsdrehlager um die zweite Drehachse gelagert ist. Bevorzugt sind dabei der innere Rahmen, der äußere Rahmen, der Spiegelhalter und die Torsionsdrehlager monolithisch ausgebildet. Bei einer Verkippung des Spiegelhalters tritt keinerlei Reibung auf. Durch eine sachgemäße Auslegung der Torsionsdrehlager kann erreicht werden, dass die im Torsionsdrehlager auftretenden Spannungen hinreichend klein im Vergleich zur Zugfestigkeit des Lagerwerkstoffs sind, so dass die Torsionsdrehlager praktisch verschleißfrei arbeiten. Ferner sind für den Betrieb der Torsionsdrehlager keine Schmierstoffe erforderlich.

Bei weiter bevorzugten Ausführungsformen der Erfindung sind die beiden Linearantriebe identisch ausgebildet. Vorzugsweise erstreckt sich die Antriebsachse des hinteren Linearantriebs durch eine Bohrung des vorderen Linearantriebs hindurch. Diese Bohrung ermöglicht es, die Hubbewegung des hinteren Linearantriebs über die Antriebsachse direkt auf den Scannerspiegel bzw. dessen Spiegellagerung zu übertragen. Somit können die beiden Antriebsachsen völlig unabhängig voneinander und mit annähernd gleicher Dynamik auf die beiden Drehachsen des Scannerspiegels wirken. Die Linearantriebe und/oder die Antriebsachsen sind vorzugsweise über Membranfedern als Festkörperlager gelagert. Diese Lager ermöglichen eine hochdynamische Bewegung der Antriebsachsen und unterliegen keinem Verschleiß.

Bevorzugt sind die beiden Linearantriebe zwei unabhängige Tauchspulenantriebe mit jeweils einem Hub von einigen Millimetern.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: einen Längsschnitt durch die erfindungsgemäße Ein-Spiegel- Scannervorrichtung; und
- Fig. 2: die Detailansicht des in Fig. 1 gezeigten Zweiachs-Biegegelenks für den Scannerspiegel.

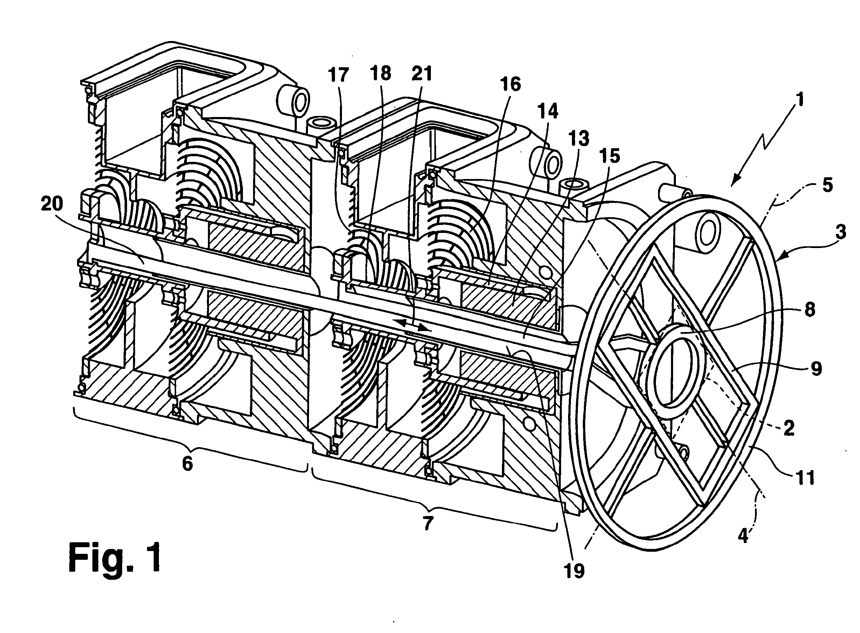

Die in **Fig. 1** gezeigte Ein-Spiegel-Scannervorrichtung **1** umfasst einen Scannerspiegel **2,** der über ein Zweiachs-Biegegelenk **3** um zwei zueinander rechtwinklige Achsen **4, 5** drehbar gelagert ist, und zwei als Tauchspulenantriebe ausgebildete voneinander unabhängige Kurzhub-Linearantriebe **6, 7** zum jeweiligen Verschwenken des Scannerspiegels 2 um die erste und zweite Drehachse 4, 5.

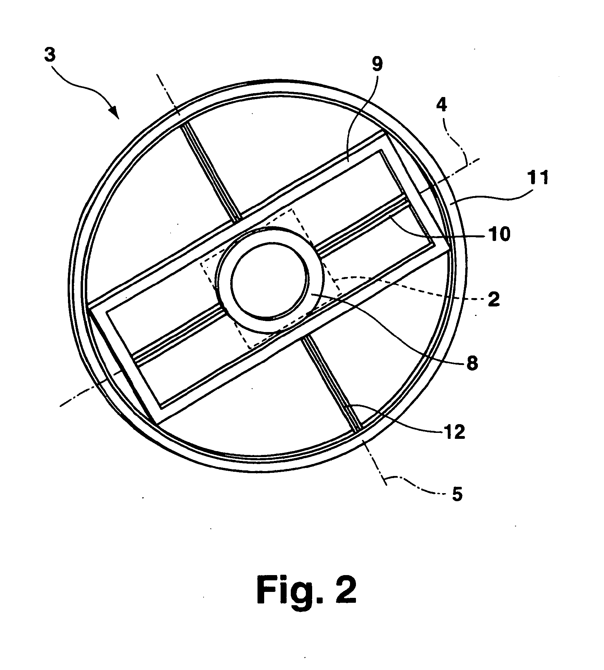

Wie in **Fig. 2** gezeigt, weist das Zweiachs-Biegegelenk 3 einen den Scannerspiegel 2 tragenden runden Spiegelhalter **8** auf, der in einem rechteckigen inneren Rahmen **9** über jeweils zwei Torsionsdrehlager **10** um die erste Drehachse 4 gelagert ist. Der innere Rahmen 9 ist in einem runden äußeren Rahmen **11** über jeweils zwei Torsionsdrehlager **12** um die zweite Drehachse 5 gelagert. Im gezeigten Ausführungsbeispiel sind die Torsionsdrehlager 10, 12 jeweils durch Doppelstege gebildet, die schlank und hoch gestaltet sind, so dass sie relativ weich gegen Torsion, aber steif gegen Durchbiegung sind. Das Zweiachs-Biegegelenk 3 kann monolithisch gefertigt oder aus entsprechenden Elementen gefügt sein. Bei einer Verkippung des Spiegelhalters 8 tritt keinerlei Reibung auf. Durch eine sachgemäße Auslegung des Zweiachs-Biegegelenks 3 kann erreicht werden, dass die im Biegegelenk 3 auftretenden Spannungen hinreichend klein im Vergleich zur Zugfestigkeit des Lagerwerkstoffs sind, so dass die Torsionsdrehlager 10, 12 praktisch verschleißfrei arbeiten. Ferner sind für den Betrieb der Torsionsdrehlager 10, 12 keine Schmierstoffe erforderlich.

Die beiden Tauchspulenantriebe 6, 7 sind identisch ausgebildet und bezüglich des Scannerspiegels 2 hintereinander angeordnet, wobei der hintere Tauchspulenantrieb 6 zum Verschwenken des Scannerspiegels 2 um die erste Drehachse 4 und der vordere Tauchspulenantrieb 7 zum Verschwenken des Scannerspiegels 2 um die zweite Drehachse 5 dient.

Der vordere Tauchspulenantrieb 7 umfasst einen ortsfesten Permanentmagneten **13,** eine diesen umgebende, verschiebbar geführte Tauchspule **14** sowie einen am hinteren Ende der Tauchspule 14 befestigten Stößel **15** als Antriebsachse. Die Tauchspule 14 und das hintere Ende des Stößels 15 sind mithilfe von zwei Membranfedern **16, 17** gelagert, die miteinander über ein Rohr **18** starr gekoppelt sind. Durch dieses Rohr 18 und eine zentrale Bohrung **19** im Permanentmagneten 13 erstreckt sich der Stößel 15 nach vorne in Richtung Zweiachs-Biegegelenk 3. Der hintere Tauchspulenantrieb 7 ist analog aufgebaut, wobei sich dessen Stößel (Antriebsachse) **20** parallel neben dem Stößel 15 durch das Rohr 18 und die zentrale Bohrung 19 des vorderen Tauchspulenantriebs 7 erstreckt. Die beiden Stößel 15, 20 verlaufen also parallel zueinander mit gleicher Verschieberichtung (Doppelpfeil **21**), wobei der Stößel 20 exzentrisch zur ersten Drehachse 4 und der Stößel 15 exzentrisch zur zweiten Drehachse 5 jeweils am Spiegelhalter 8 angreifen. Bei dem in Fig. 1 gezeigten nicht-ausgelenkten Scannerspiegel 2 verläuft die Verschieberichtung 21 der beiden Tauchspulenantriebe 6, 7 rechtwinklig zu der von den beiden Drehachsen 3, 4 aufgespannten Ebene. Die beiden Tauchspulenantriebe 6, 7 mit einem Hub von einigen Millimetern wirken mit ihren Antriebsachsen 15, 20 völlig unabhängig voneinander und mit annähernd gleicher Dynamik auf die beiden Drehachsen 4, 5 des Zweiachs-Biegegelenks 3. Durch Bestromen der Tauchspulen der beiden Tauchspulenantriebe 6, 7 werden die Stößel 15, 20 unabhängig voneinander im Sinne des Doppelpfeils 21 verschoben und dadurch der Spiegelhalter 8 und der Scannerspiegel 2 um die jeweilige Drehachse 4, 5 verkippt.

## Patentansprüche

1. Ein-Spiegel-Scannervorrichtung (1) mit einem Scannerspiegel (2), der um eine erste Achse (4) an einem Rahmen (9) drehbar gelagert ist, welcher um eine zur ersten Drehachse (4) rechtwinklige zweite Achse (5) drehbar gelagert ist, und mit zwei voneinander unabhängigen Linearantrieben (6, 7) zum jeweiligen Verschwenken des Scannerspiegels (2) um die erste und zweite Drehachse (4, 5), wobei der eine Linearantrieb (6) exzentrisch zur ersten Drehachse (4) am Scannerspiegel (2) oder an einem den Scannerspiegel (2) tragenden Spiegelhalter (8) angreift und der andere Linearantrieb (7) exzentrisch zur zweiten Drehachse (5) am Scannerspiegel (2) oder an dem Spiegelhalter (8) angreift,
**dadurch gekennzeichnet,**
**dass** bei nicht-ausgelenktem Scannerspiegel (2) die Antriebsachsen (15, 20) die beiden Linearantriebe (6, 7) rechtwinklig zu der von den beiden Drehachsen (4, 5) aufgespannten Ebene koaxial oder parallel nebeneinander verlaufen und dass die beiden Linearantriebe (6, 7) bezüglich des Scannerspiegels (2) in Richtung ihrer Antreibsachsen (15, 20) hintereinander angeordnet sind.

2. Ein-Spiegel-Scannervorrichtung nach Anspruch 1, **dadurch gekennzeichnet, dass** der Spiegelhalter (8) am Rahmen (9) über Torsionsdrehlager (10) um die erste Drehachse (4) gelagert ist.

3. Ein-Spiegel-Scannervorrichtung nach einem der vorhergehenden Ansprüche, **dadurch gekennzeichnet, dass** der Rahmen (9) an einem äußeren Rahmen (11) über Torsionsdrehlager (12) um die zweite Drehachse (5) gelagert ist.

4. Ein-Spiegel-Scannervorrichtung nach Anspruch 2 und 3, **dadurch gekennzeichnet, dass** der innere Rahmen (9), der äußere Rahmen (11), der Spiegelhalter (8) und die Torsionsdrehlager (10, 12) monolithisch ausgebildet sind.

5. Ein-Spiegel-Scannervorrichtung nach einem der vorhergehenden Ansprüche, **dadurch gekennzeichnet, dass** die Antriebsachse (20) des hinteren Linearantriebs (6) sich durch eine Bohrung (19) des vorderen Linearantriebs (7) hindurch erstreckt.

6. Ein-Spiegel-Scannervorrichtung nach einem der vorhergehenden Ansprüche, **dadurch gekennzeichnet, dass** die Linearantriebe (6, 7) und/oder die Antriebsachsen (15, 20) über Membranfedern (16, 17) gelagert sind.

7. Ein-Spiegel-Scannervorrichtung nach einem der vorhergehenden Ansprüche, **dadurch gekennzeichnet, dass** mindestens einer, vorzugsweise beide Linearantriebe (6, 7) Tauchspulenantriebe sind.

## Claims

1. Single mirror scanning device (1) having a scanner mirror (2) which is supported for rotation about a first axis (4) on a frame (9) which is supported for rotation about a second axis (5) which is perpendicular relative to the first rotation axis (4) and which has two linear drives (6, 7) which are independent of each other for pivoting the scanner mirror (2) about the first and second rotation axis (4, 5), respectively, the one linear drive (6) engaging eccentrically relative to the first rotation axis (4) on the scanner mirror (2) or on a mirror holder (8) which carries the scanner mirror (2), and the other linear drive (7) engaging eccentrically relative to the second rotation axis (5) on the scanner mirror (2) or on the mirror holder (8),
**characterised in that**
when the scanner mirror (2) is in the non-deflected state, the drive shafts (15, 20) of the two linear drives (6, 7) extend coaxially or parallel with each other at right-angles relative to the plane defined by the two rotation axes (4, 5) and **in that** the two linear drives (6, 7) are arranged one behind the other relative to the scanner mirror (2) in the direction of the drive shafts (15, 20) thereof.

2. Single mirror scanning device according to claim 1, **characterised in that** the mirror holder (8) is supported on the frame (9) by means of torsion pivot bearings (10) about the first rotation axis (4).

3. Single mirror scanning device according to either claim 1 or claim 2, **characterised in that** the frame (9) is supported on an outer frame (11) by means of torsion pivot bearings (12) about the second rotation axis (5).

4. Single mirror scanning device according to claim 2 and claim 3, **characterised in that** the inner frame (9), the outer frame (11), the mirror holder (8) and the torsion pivot bearings (10, 12) are constructed in a monolithic manner.

5. Single mirror scanning device according to any one of the preceding claims, **characterised in that** the drive shaft (20) of the rear linear drive (6) extends through a hole (19) of the front linear drive (7).

6. Single mirror scanning device according to any one of the preceding claims, **characterised in that** the linear drives (6, 7) and/or the drive shafts (15, 20) are supported by means of diaphragm springs (16, 17).

7. Single mirror scanning device according to any one of the preceding claims, **characterised in that** at least one, preferably both, linear drive(s) (6, 7) are dynamic coil drives.

## Revendications

1. Dispositif de balayage à miroir unique (1) comportant un miroir de balayage (2) qui est monté tournant autour d'un premier axe (4) sur un cadre (9), lequel est monté tournant autour d'un deuxième axe (5) perpendiculaire au premier axe de rotation (4), et comportant deux entraînements linéaires (6, 7) indépendants l'un de l'autre pour le pivotement respectif du miroir de balayage (2) autour des premier et deuxième axes de rotation (4, 5), un entraînement linéaire (6) agissant excentriquement par rapport au premier axe de rotation (4) sur le miroir de balayage (2) ou sur un support de miroir (8) portant le miroir de balayage (2), et l'autre entraînement linéaire (7) agissant excentriquement par rapport au deuxième axe de rotation (5) sur le miroir de balayage (2) ou sur le support de miroir (8),
**caractérisé en ce**
**que** lorsque le miroir de balayage (2) n'est pas dévié, les axes d'entraînement (15, 20) des deux entraînements linéaires (6, 7) s'étendent coaxialement ou parallèlement l'un à côté de l'autre à angle droit par rapport au plan défini par les deux axes de rotation (4, 5) et que les deux entraînements linéaires (6, 7) sont disposés l'un derrière l'autre dans la direction de leurs axes d'entraînement (15, 20) par rapport au miroir de balayage (2).

2. Dispositif de balayage à miroir unique selon la revendication 1, **caractérisé en ce que** le support de miroir (8) est monté tournant autour du premier axe de rotation (4) sur le cadre (9) par l'intermédiaire de paliers rotatifs de torsion (10).

3. Dispositif de balayage à miroir unique selon l'une des revendications précédentes, **caractérisé en ce que** le cadre (9) est monté tournant autour du deuxième axe de rotation (5) sur un cadre extérieur (11) par l'intermédiaire de paliers rotatifs de torsion (12).

4. Dispositif de balayage à miroir unique selon les revendications 2 et 3, **caractérisé en ce que** le cadre intérieur (9), le cadre extérieur (11), le support de miroir (8) et les paliers rotatifs de torsion (10, 12) sont réalisés sous forme monolithique.

5. Dispositif de balayage à miroir unique selon l'une des revendications précédentes, **caractérisé en ce que** l'axe d'entraînement (20) de l'entraînement linéaire arrière (6) s'étend à travers un perçage (19) de l'entraînement linéaire avant (7).

6. Dispositif de balayage à miroir unique selon l'une des revendications précédentes, **caractérisé en ce que** les entraînements linéaires (6, 7) et/ou les axes d'entraînement (15, 20) sont montés par l'intermédiaires de ressorts à diaphragme (16, 17).

7. Dispositif de balayage à miroir unique selon l'une des revendications précédentes, **caractérisé en ce qu'**au moins un entraînement linéaire (6, 7), de préférence les deux, sont des entraînements à bobine mobile.
